# EUROPÄISCHE PATENTSCHRIFT

(11) **EP 4 119 638 B1**
(45) Veröffentlichungstag und Bekanntmachung des Hinweises auf die Patenterteilung: **29.11.2023**
(21) Anmeldenummer: 22179572.7
(22) Anmeldetag: 17.06.2022
(51) Int. Cl.: C10L 5/44, C10L 9/08

(54) **ERSATZBRENNSTOFF FÜR HOLZPELLETS**
SUBSTITUTE FUEL FOR WOOD PELLETS
COMBUSTIBLE DE SUBSTITUTION POUR GRANULÉS DE BOIS

(30) Priorität: 12.07.2021 AT 505712021
(43) Veröffentlichungstag der Anmeldung: 18.01.2023
(73) Patentinhaber: Ganzi, Gerald, 9064 Magdalensberg (AT); Huber, Martin, 9570 Ossiach (AT); Huber, Gregor, 9570 Ossiach (AT)
(72) Erfinder: Ganzi, Gerald, 9064 Magdalensberg (AT); Huber, Martin, 9570 Ossiach (AT)
(74) Vertreter: Hübscher & Partner Patentanwälte GmbH

(56) Entgegenhaltungen:
- EP-A1- 2 952 558
- WO-A1-2011/079948
- DE-A1- 10 224 850
- DE-A1-102009 030 013

## Beschreibung

Die Erfindung bezieht sich auf einen Ersatzbrennstoff für Holzpellets aus getrockneten Hackschnitzeln mit einer Teilchengröße im Bereich zwischen 2 und 30 mm.

Um den mit der Herstellung von Holzpellets verbundenen Aufwand zu vermeiden, wurde bereits vorgeschlagen (DE 102 24 850 A1), statt der Holzpellets Hackschnitzel einzusetzen, die dann in für die Beschickung mit Holzpellets ausgelegten Heizkesseln statt der Holzpellets eingesetzt werden können, wenn die Teilchengröße der getrockneten Hackschnitzel auf einen bestimmten Größenbereich beschränkt werden, weil nur dann mit der Rieselfähigkeit von Holzpellets vergleichbare Rieseleigenschaften der Hackschnitzel erreicht werden können. Es hat sich jedoch herausgestellt, dass die Beschränkung der Teilchengröße der Hackschnitzel auf einen bestimmten Größenbereich den Einsatz von Hackschnitzeln als Ersatzbrennstoff für Holzpellets nur bedingt erlaubt.

Der Erfindung liegt somit die Aufgabe zugrunde, Hackschnitzel vorzusehen, die einen hinsichtlich der Förder- und Dosiereigenschaften mit Holzpellets durchaus vergleichbaren Brennstoff darstellen und daher problemlos in Heizeinrichtungen eingesetzt werden können, die für die Beschickung mit Holzpellets ausgelegt sind.

Ausgehend von einem Ersatzbrennstoff der eingangs geschilderten Art löst die Erfindung die gestellte Aufgabe dadurch, dass die Hackschnitzel eine abgeflämmte Oberfläche aufweisen.

Der Erfindung liegt die Erkenntnis zugrunde, dass die Rieselfreudigkeit und damit die Gleiteigenschaften zwischen den einzelnen Teilchen der Hackschnitzel durch von der Oberfläche der Teilchen abstehende Holzfasern, kleine Holzspäne und scharfe Kanten erheblich beeinträchtigt werden, sodass das durch diese Holzfasern und abstehende Spanteile bedingte gegenseitige Verhaken der Hackschnitzelteile nur dann unterbunden werden kann, wenn eine zur Vermeidung eines gegenseitigen Verhakens ausreichend glatte Oberfläche der Teilchen sichergestellt werden kann. Durch ein einfaches Abflämmen der Oberfläche der Hackschnitzelteilchen wird eine Oberflächenbeschaffenheit erreicht, die diesen Anforderungen genügt, sodass Hackschnitzel mit einer entsprechend abgeflämmten Oberfläche vorteilhaft als Brennstoffersatz für Holzpellets verwendet werden können, wenn die notwendige Beschränkung der Teilchengröße eingehalten wird.

Besonders vorteilhafte Verhältnisse werden erreicht, wenn der Massenanteil der durch den Bereich der Teilchengröße zwischen 4 und 20 mm bestimmten Hauptfraktion der Hackschnitzel mindestens 95 % beträgt, weil in diesem Fall die verbleibenden, außerhalb der Hauptfraktion liegende Fein- und Grobanteile keinen ins Gewicht fallenden Störfaktor darstellen können.

Zum Herstellen eines Ersatzbrennstoffs für Holzpellets auf Basis von Hackschnitzeln können die nach einer Siebung eine Teilchengröße im Bereich zwischen 2 und 30 mm aufweisenden Hackschnitzel einen Drehrohrofen durchlaufen, in dem von den Hackschnitzeln abstehende Fasern durch ein Abflämmen der Oberfläche abgebrannt werden. Die Flammenbeaufschlagung ist dabei so einzustellen, dass die von der Oberfläche der Teilchen abstehenden Holzfasern und Späne abgebrannt, bzw. scharfe Kanten angesengt werden, die Teilchenoberfläche aber weitgehend geschont wird, um den Heizwert der Hackschnitzel nicht nachhaltig zu beeinträchtigen. Dies gelingt vorteilhaft wenn der Durchlauf durch den Drehrohrofen für die Trocknung der Hackschnitzel herangezogen wird, weil der bei der Flammenbeaufschlagung aus der Teilchenoberfläche austretende Dampf einem Ansengen der Oberfläche entgegenwirkt.

Die Förderung der Hackschnitzel durch den Drehrohrofen erlaubt eine weitgehend gleichmäßige, angepasst kurzfristige Flammenbeaufschlagung der Hackschnitzel, die in weiterer Folge durch Abrieb von den abgebrannten Faser- und Spanresten gesäubert und im Bereich angesengter, scharfer Kanten abgerundet werden, bedingt durch die Reibung einerseits zwischen den einzelnen Schnitzelteilchen und anderseits zwischen den Schnitzelteilchen und der Trommel des Drehrohrofens. Dieser Abrieb kann durch in den Drehrohrofen eingebrachte Mahlkörper unterstützt werden. Für eine solche Säuberung durch Abrieb kann auch ein Rüttelboden vorteilhaft eingesetzt werden.

Die Abflämmung der Oberfläche der Hackschnitzel führt außerdem zu einer Abtötung von Keimen und Schädlingen und wirkt auch bei einem Pilzbefall. Dazu kommt, dass mit der Oberflächenabflämmung eine Hydrophobierung der Teilchen verbunden ist. Die dadurch bedingte, erschwerte Feuchtigkeitsaufnahme muss als zusätzlicher Vorteil für die Lagerhaltung angesehen werden.

## Patentansprüche

1. Ersatzbrennstoff für Holzpellets aus getrockneten Hackschnitzeln mit einer Teilchengröße im Bereich zwischen 2 und 30 mm, **dadurch gekennzeichnet, dass** die Hackschnitzel eine abgeflämmte Oberfläche aufweisen.

2. Ersatzbrennstoff nach Anspruch 1, **dadurch gekennzeichnet, dass** der Massenanteil der durch den Bereich der Teilchengröße zwischen 4 und 20 mm bestimmten Hauptfraktion der Hackschnitzel mindestens 95 % beträgt.

3. Verfahren zum Herstellen eines Ersatzbrennstoffs für Holzpellets aus nach einer Siebung eine Teilchengröße im Bereich zwischen 2 und 30 mm aufweisenden, getrockneten Hackschnitzeln, **dadurch gekennzeichnet, dass** die Hackschnitzel einen Drehrohrofen durchlaufen, in dem von den Hackschnitzeln abstehende Fasern durch ein Abflämmen der Oberfläche abgebrannt werden.

4. Verfahren nach Anspruch 3, **dadurch gekennzeichnet, dass** die Hackschnitzel während des Durchlaufs durch den Drehrohrofen mithilfe von Mahlkörpern an der Oberfläche abgerieben werden.

## Claims

1. Substitute fuel for wood pellets made of dried wood chips with a particle size in the range between 2 and 30 mm, **characterized in that** the wood chips have a flame-scarfed surface.

2. Substitute fuel according to claim 1, **characterized in that** the mass fraction of the main fraction of the wood chips determined by the range of particle size between 4 and 20 mm is at least 95%.

3. Method for producing a substitute fuel for wood pellets from dried wood chips having a particle size in the range between 2 and 30 mm after screening, **characterized in that** the wood chips pass through a rotary kiln in which fibers protruding from the wood chips are burned off by flame-scarfing the surface.

4. Method according to claim 3, **characterized in that** the wood chips are rubbed on the surface with the aid of grinding bodies during their passage through the rotary kiln.

## Revendications

1. Combustible de substitution pour granulés de bois fait de copeaux séchés d'une granulométrie située entre 2 et 30 mm, **caractérisé en ce que** les copeaux présentent une surface passée à la flamme.

2. Combustible de substitution selon la revendication 1, **caractérisé en ce que** la proportion en masse de la fraction principale des copeaux définie par une granulométrie située entre 4 et 20 mm est d'au moins 95%.

3. Procédé de fabrication d'un combustible de substitution pour des granulés fait de copeaux séchés présentant après un tamisage une granulométrie située entre 2 et 30 mm, **caractérisé en ce que** les copeaux traversent un four rotatif dans lequel les fibres dépassant des copeaux sont brûlées par un passage à la flamme de la surface.

4. Procédé selon la revendication 3, **caractérisé en ce que** les copeaux sont abrasés au niveau de la surface pendant la traversée du four rotatif à l'aide de corps broyants.
